# EUROPEAN PATENT SPECIFICATION

(11) **EP 0 858 980 B1**
(45) Date of publication and mention of the grant of the patent: **06.10.2004**
(21) Application number: 97500033.2
(22) Date of filing: 14.02.1997
(51) Int. Cl.: C04B 18/06, C04B 18/02, C04B 28/04, C04B 28/26

(54) **Process of manufacturing mortar for construction**
Verfahren zur Herstellung von Baumörtel
Procédé de fabrication de mortier de construction

(30) Priority: 13.02.1997 ES 9700297
(43) Date of publication of application: 19.08.1998
(73) Proprietor: Neira Pous, Joan Maria, 44550 Teruel, Andorra (ES); Garcia Gonzalez, Maria Concepcion, 44500 Teruel, Andorra (ES)
(72) Inventor: Neira Pous, Joan Maria, 44550 Teruel, Andorra (ES); Garcia Gonzalez, Maria Concepcion, 44500 Teruel, Andorra (ES)
(74) Representative: Gollob, Ulrik, Dr.

(56) References cited:
- DE-A- 2 163 347
- DE-A- 2 811 910
- US-A- 2 250 107
- US-A- 2 414 734
- US-A- 3 573 940
- US-A- 4 917 732
- CHEMICAL ABSTRACTS, vol. 118, no. 20, 17 May 1993 Columbus, Ohio, US; abstract no. 196795k, L.I.BOKOVA ET AL. : "Naturally hardened aerated ash concrete for monolithic house construction" XP000472124 & ENERG. STROIT., no. 4, 1992, RUSSIA, page 61
- CHEMICAL ABSTRACTS, vol. 116, no. 12, 23 March 1992 Columbus, Ohio, US; abstract no. 112216v, I.G.PETRASHOVA ET AL.: "Complex modification of plugging cement pastes" XP000285387 & IZV. VYSSH. UCHEBN. ZAVED., STROIT. ARKHIT., no. 8, 1991, pages 64-68,

## Description

The present invention relates to a process of manufacturing prefabricated parts from mortar, such as for instance bricks, jack arches, beams and joists, paving stones, steps and the diverse types known in construction, based on either clay or concrete, being also possible its use in bulk for diverse elements.

Various clay-based prefabricated parts are currently known, such as for instance all kinds of bricks, tiles, jack arches, plates, floor tiles, and so on; also known are numerous prefabricated parts made of concrete , such as blocks, plates, beams, steps, paving stones, and so on.

The prefabricated parts for construction that are made of clay, have the drawback of their manufacturing costs, since the material needs to be extracted from the beds and properly handled in order to prepare the same for moulding to obtein the part as programmed, a further resultant drawback being the environmental damage produced by the clay beds, since the excavations, generally at ground level are never leveled and refilled.

With regard to the prefabricated elements from concrete, their main drawback is the high manufacturing cost; at the same time their large content of cement is another cause for environmental damage, since the raw material for the elaboration of cement is extracted from quarries.

DE 2811910 A1 discloses a dry mortar mixture used as lining in mines.

It is an object of the present invention to overcome the predescribed drawbacks.

This object is solved by the features of claims 1 and 6. Preferred embodiments are disclosed in the dependent claims.

The process of manufacturing prefabricated mortar, object of the present invention, has been devised to overcome these drawbacks with which numerous prefabricated parts may be formed that can present outer surfaces being somewhat rough or granulated, or smooth depending on how they are programmed, the material being made from a mixture of inorganic solids, comprising flying ashes and slags obtained from coal, mixed with a small amount of portland cement and another small part of water, being possible to get a fast drying by the addition of a hardening accelerator. In the case of certain prefabricated parts that need thermal treatment, a small amount of sodium silicate is added to the above described mixture as a substitute of portland cement, so that it will contribute to obtaining a perfect homogenization of all the components. Optionally, expanded clay and common sand may also be integrated in the formula.

The disclosed invention presents numerous advantages, from which some of the most relevant ones are cited. It is particularly to be highlighted, the fact that up to 95 % of the material employed is recycled material obtained from flying ashes and slags of the coal that is consumed in power stations for the production of electricity. This recycling of the inorganic material that comes from the coal will reduce or prevent the formation of large ponds where the material is deposited and that are so harmful for the environment.

Another essential advantage is derived from the costs, since the addition of cement is reduced to a minimum, while the ashes and slag can even be obtained at no cost, as the power stations currently spend significant sums of money for disposing of the aforementioned inorganic solids.

Another economic advantage comes from the fact that some parts, such as for instance, bricks, do not need to be baked, and can be used 48 hours after being manufactured.

Another advantage achieved is that of the formation of a high resistance and light weight concrete that can be manipulated either by manual procedures or by machines, concrete mixers and so on.

Finally, as further advantage it is mentioned that the structure, based on inorganic solids, provides better technical features to the prefabricated parts, as while they are of a lighter weight, at the same time they provide a resistance which is higher than the ones made of clay or of concrete.

For a better understanding of the object of this invention, a preferred practical embodiment of the same is represented in the accompanying drawings in which:
Figure -1- shows a general schematic diagram of the process herein presented,
Figure -2- shows an optional schematic diagram of the process herein presented,

The process of manufacturing mortar for construction herein disclosed, begins, as it may be seen from the referenced figures, starting from inorganic solids (1), from which flying ashes (2) and slags (3) are derived, said slags (3) being ground to a predetermined calibration (4), so that afterwards,. by selection they turn into usable slag (5); on the other hand, the flying ashes (2) are also selected so that they become usable flying ashes (6).

Depending upon the kind of prefabricated parts that are programmed, the mortar (7) can be made from flying ashes (6) and slags (5) of different granular sizes, with the addition of a small amount of portland cement (8) and the corresponding water (9). If the parts to be formed or moulded require thermal treatment, a small amount of sodium silicate (10) is then added to the mortar as a substitute to the portland cement.

Once the mortar (7) is obteined, it goes either to moulds (11) where the parts (12) are formed through vibrations or to presses (13) where the preset parts (14) are obtained by extrusion.

Another optional process for manufacturing mortar for construction herein disclosed, as can be seen in figure -2-, is that of, starting also from the usable slags (5), the usable flying ashes (6), a small part of sodium silicates (15), and water (16), and through a proper homogenization obtaining a pre-mortar (17) that is transformed in granules of different calibers (18), which are then thermally treated for hardening in the corresponding oven (19), from which hardened granules (20) are taken out.

The optional mortar (21), comprises the previously described granules (20), to which usable slags (5), flying ashes (6), common sand (22), water (16), portland cement (8) and hardening accelerator additive (23) are added. Optionally, for the formation of cellular concrete with insulating effects, a gas generating additive (24) of the kind commonly used in the field, will be added to the previously described mixture.

Once the mortar (21) is homogenized, it is directed either to a bulk supply (25) or towards the moulds (26) that provide the finished parts.

Sulphate-resistant or sea water-resistant cements may be used when the composition of the raw material or the final use of either the mortar or the elements made therewith so require. It is also possible to use white portland cement, when it is required to give certain whiteness to the finishing of the elements.

### PERCENTAGE COMPOSITIONS

### MORTAR WITHOUT THERMAL TREATMENT

| Element | Percentage | Average |
|---|---|---|
| Ground slag | Between 70 and 90% | 80% |
| Flying ashes | Between 5 and 20% | 12.5% |
| portland cement | Between 4.5 and 9.5% | 7% |
| Hardening accelerator | Between 0.2 and 0.8% | 0:5% |

Optionally, the hardening accelerator may be eliminated and the parts may be left in an environmental drying process.

| MORTAR WITH THERMAL TREATMENT | | |
|---|---|---|
| **Element** | **Percentage** | **Average** |
| Ground slag | Between 15 and 30% | 22.5% |
| Flying ashes | Between 65 and 80% | 72.5% |
| Sodium silicate | Between 2 and 8% | 5% |

| HARDENED GRANULE (12) | | |
|---|---|---|
| **Element** | **Percentage** | **Average** |
| Usable slag | Between 15 and 30% | 22.5% |
| Flying ashes | Between 65 and 80% | 72.5% |
| Sodium silicate | Between 2 and 8% | 5% |

| MORTAR (21) WITH HARDENED GRANULE (20) | | |
|---|---|---|
| **Element** | **Percentage** | **Average** |
| Usable slag | Between 20 and 39.64% | 29.83% |
| Flying ashes | Between 32 and 76.8% | 54.4% |
| portland cement | Between 5 and 11.84% | 8.42% |
| Sodium silicate | Between 1 and 6% | 3.5% |
| Common sand | Between 1 and 6% | 3.5% |
| Additives | Between 0 and 0.7% | 0.35% |

Optionally, formulas with the following percentage compositions may also be used:

| **Element** | **Percentage** | **Average** |
|---|---|---|
| Slag | Between 50 and 90% | 70% |
| Flying ashes | Between 0 and 20% | 10% |
| portland cement | Between 4 and 25% | 14.5% |
| Common sand | Between 0 and 10% | 5% |
| Additives | Between 0.2 and 0.8% | 0.5% |

| **Element** | **Percentage** | **Average** |
|---|---|---|
| Slag | Between 10 and 30% | 20% |
| Flying ashes | Between 0 and 10% | 5% |
| Expanded clay | Between 45 and 70% | 57.5% |
| portland cement | Between 4 and 20% | 12% |
| Common sand | Between 0 and 10% | 5% |
| Additives | Between 0.2 and 0.8% | 0.5% |

The amount of water to be added for each formula will be according to the needs of the machine that homogenizes the plaster and the predetermined texture of the mortar.

The mortar in dry state, that is, before being formed with water, is suitable for packaging, and may be transported with the only precaution that it may not get wet, as is the case for cements.

Among the numerous parts that can be formed with the invention herein disclosed, only the following is mentioned as examples: single and double bricks, hollow bricks with lattice, lattices, tiles -both flat and curved-, being also possible the moulding of parts such as blocks, jack arches, beams, paving stones, floor tiles, kerbs and any kind of mouldable part.

Having sufficiently described the nature of the present invention, and a way of putting it into practice, it is only to be added that it is possible to vary slightly the percent ratios, provided that said alterations do not vary substantially the nature of the invention that is claimed as follows:

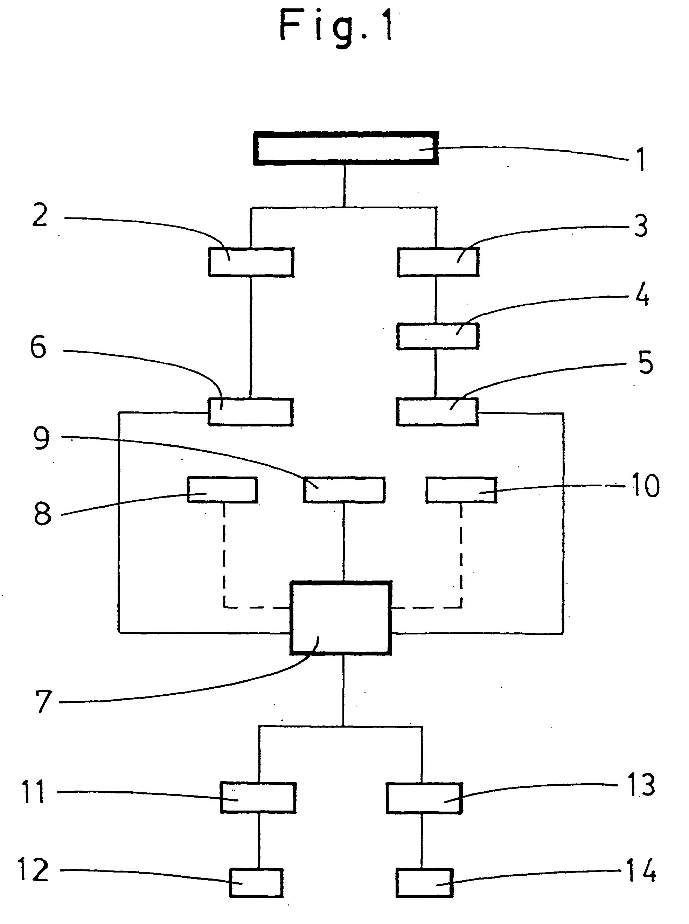

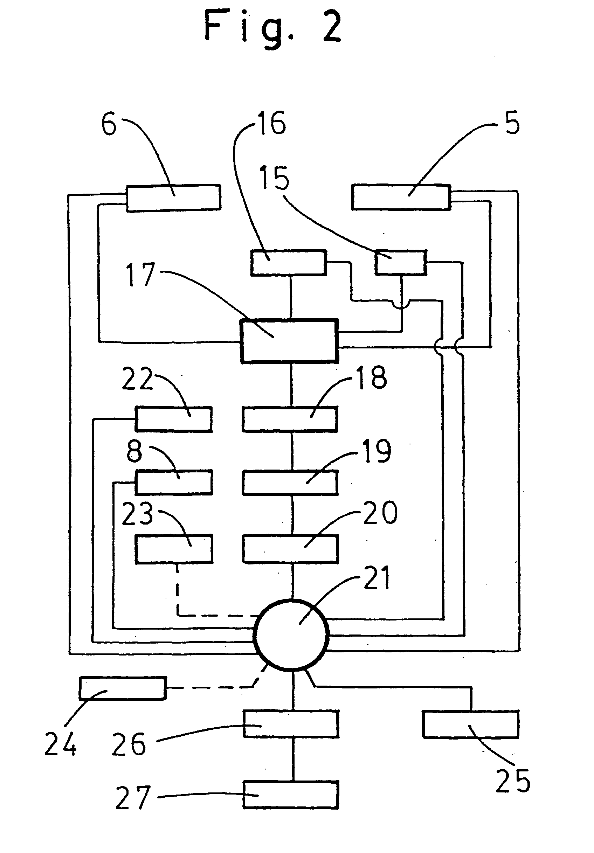

## Claims

1. Process of manufacturing prefabricated parts from mortar, wherein inorganic solids obtained from the combustion of coal are treated such that the flying ashes are selected according to their proper caliber, the slags are ground, so that they also reach a predetermined caliber so as to be mixed according to the parts to be manufactured and in an adequate proportion, with the aforementioned flying ashes and with portland cement or sodium silicate, for the cases where the parts are to be subjected to thermal treatment, and water, further comprising a step where the mortar goes to moulds where the prefabricated parts are formed through vibration, or an alternative step where the mortar goes to presses where the prefabricated parts are obtained by extrusion.

2. Process of manufacturing prefabricated parts from mortar according to claim 1,
**characterized in that**
the proportions of the compound for the mortar without thermal treatment comprise:
ground slag between 70 and 90 percent, average 80 percent;
flying ashes between 5 and 20 percent, average 12.5 percent;
Portland cement between 4.5 and 9 percent, average 7 percent.

3. Process of manufacturing prefabricated parts from mortar according to claim 1,
**characterized in that**
the compound for the mortar without thermal treatment comprises:
hardening accelerator between 0.2 and 0.8 percent, average 0.5 percent.

4. Process of manufacturing prefabricated parts from mortar according to claim 1,
**characterized in that**
the proportions of the compound for the mortar with thermal treatment comprise:
Ground slag between 15 and 30 percent, averaged 22.5 percent;
Flying ashes between 65 and 80 percent, average 72.5 percent;
Sodium silicate between 2 and 8 percent, average 5 percent.

5. Process of manufacturing prefabricated parts from mortar according to one of the previous claims,
**characterized in that**
common sand and/or expanded clay are added to the mixture.

6. Process of manufacturing prefabricated parts from mortar, wherein a pre-mortar (17) is obtained through a proper homogenization of usable slags (5) which are ground so that they also reach a predetermined caliber sodium silicates (15), and water (16) and optional usable flying ashes (6) which are selected according to their proper caliber, the pre-mortar being transformed in granules of different calibers (18), which are then thermally treated for hardening in an oven (19), from which hardened granules (20) are taken out, further comprising steps where said usable slags (5), water (16), portland cement (8), and hardening accelerator additive (23) and optional flying ashes (6), common sand (22), are added to the granules (20), thereby obtaining mortar (21), comprising a step where the mortar goes to moulds where the prefabricated parts are formed through vibration, or an alternative step where the mortar goes to presses where the prefabricated parts are obtained by extrusion.

7. Process of manufacturing prefabricated parts from mortar according to claim 6,
**characterized in that**
the granules comprise:
| | | |
|---|---|---|
| Usable slag | Between 15 and 30 % | Average 22.5 %; |
| Flying ashes | Between 65 and 80 %, | Average 72.5 %; |
| Sodium silicate | Between 2 and 8 %, | Average 5 %. |

8. Process of manufacturing prefabricated parts from mortar according to Claim 6,
**characterized in that**
the mortar (21) is made of the pre-mortar (17) in hardened granules with the addition of usable slags, flying ashes, portland cement, sodium silicate and additives, said mortar thus being formed of the following percentage composition :
| | | |
|---|---|---|
| Usable slag | Between 20 and 39.64 % | Average 29.83 %; |
| Flying ashes | Between 32 and 76.8 %, | Average 54.4 %; |
| Portland cement | Between 5 and 11.84 %, | Average 8.42%; |
| Sodium silicate | Between 1 and 6 %, | Average 3.5 %; |
| Common sand | Between 1 and 6 %, | Average 3.5 %; |
| Additives | Between 0 and 0.7 % | Average 0.35 %. |

9. Process of manufacturing prefabricated parts from mortar according to claim 6,
**characterized in that**
it has the following percentage composition:
| | | |
|---|---|---|
| Usable slag | Between 50 and 90 % | Average 70 %; |
| Flying ashes | Between 0 and 20 %, | Average 10 %; |
| Portland cement | Between 4 and 25 %, | Average 14.5 % |
| Common sand | Between 0 and 10 %, | Average 5 %; |
| Additives | Between 0.2 and 0.8 %, | Average 0.5 %. |

10. Process of manufacturing prefabricated parts from mortar according to claims 6,
**characterized in that**
it has the following percentage composition:
| | | |
|---|---|---|
| Slag | Between 10 and 30 % | Average 20 %; |
| Flying ashes | Between 0 and 10 %, | Average 5 %; |
| Expanded clay | Between 45 and 70 %, | Average 57.5 %; |
| Portland cement | Between 4 and 20 %, | Average 12 %; |
| Common sand | Between 0 and 10 %, | Average 5 %; |
| Additives | Between 0.2 and 0.8 %, | Average 0.5%. |

## Patentansprüche

1. Verfahren zum Herstellen vorgefertigter Teile aus Mörtel, worin anorganische Feststoffe, die durch Verbrennung von Kohle erhalten wurden, so behandelt werden, dass die Flugaschen nach ihrem passenden Größenmaß ausgewählt werden, die Schlacken am Boden gehalten werden, so dass sie auch ein vorbestimmtes Größenmaß erreichen, so dass sie gemäß den herzustellenden Teilen und in einem angemessenen Verhältnis gemischt werden mit den vorgenannten Flugaschen und mit Portland-Zement oder Natriumsilikat, für die Fälle, wo die Teile thermischer Behandlung und Wasser ausgesetzt werden sollen, des weiteren einen Schritt einschließend, wo der Mörtel zu Formen wandert, wobei die vorgefertigten Teile durch Vibration geformt werden, oder einen alternativen Schritt, wo der Mörtel zu Pressen wandert, worin die vorgefertigten Teile durch Extrusion erhalten werden.

2. Verfahren zum Herstellen vorgefertigter Teile aus Mörtel gemäß Patentanspruch 1, **dadurch gekennzeichnet, dass** die Mischungsverhältnisse für den Mörtel ohne thermische Behandlung umfassen:
Bodenschlacke zwischen 70 und 90 Prozent, im Durchschnitt 80 Prozent:
Flugaschen zwischen 5 und 20 Prozent, im Durchschnitt 12,5 Prozent;
Portland-Zement zwischen 4,5 und 9 Prozent, im Durchschnitt 7 Prozent.

3. Verfahren zum Herstellen vorgefertigter Teile aus Mörtel gemäß Patentanspruch 1, **dadurch gekennzeichnet, dass** das Gemisch für den Mörtel ohne thermische Behandlung umfasst:
Härtungsbeschleuniger zwischen 0,2 und 0,8 Prozent, im Durchschnitt 0,5 Prozent.

4. Verfahren zum Herstellen vorgefertigter Teile aus Mörtel gemäß Patentanspruch 1, **dadurch gekennzeichnet, dass**
die Mischungsverhältnisse für den Mörtel mit thermischer Behandlung umfassen:
Bodenschlacke zwischen 15 und 30 Prozent, im Durchschnitt 22,5 Prozent;
Flugaschen zwischen 65 und 80 Prozent, im Durchschnitt 72,5 Prozent;
Natriumsilikat zwischen 2 und 8 Prozent, im Durchschnitt 5 Prozent.

5. Verfahren zum Herstellen vorgefertigter Teile aus Mörtel gemäß einem der vorangehenden Patentansprüche, **dadurch gekennzeichnet, dass** gemeiner Sand und/oder expandierter Ton der Mischung zugesetzt werden.

6. Verfahren zum Herstellen vorgefertigter Teile aus Mörtel, worin ein Voraus-Mörtel (17) erhalten wird durch eine geeignete Homogenisierung von Nutzschlacken (5), die den Boden bilden, so dass sie auch ein vorbestimmtes Größenmaß erreichen, Natriumsilikaten (15), und Wasser (16) und optionalen Nutz-Flugaschen (6), die nach ihrem passenden Größenmaß ausgesucht werden, wobei der Voraus-Mörtel in Körner unterschiedlicher Größen (18) umgeformt wird, die danach thermisch zur Aushärtung in einem Ofen (19) behandelt werden, dem gehärtete Körner (20) entnommen werden, des weiteren einen Schritt einschließend, worin die besagten Schlacken (5), Wasser (16), Portland-Zement (8) und Härtungsbeschleunigerzusatz (23), sowie optionale Flugaschen (6), gemeiner Sand (22) den Körnern (20) zugesetzt werden, wodurch Mörtel (21) erhalten wird, einen Schritt einschließend, worin der Mörtel in Formen wandert, worin die vorgefertigten Teile durch Vibration geformt werden, oder einen alternativen Schritt, worin der Mörtel zu Pressen wandert, worin die vorgefertigten Teile durch Extrusion erhalten werden.

7. Verfahren zum Herstellen vorgefertigter Teile aus Mörtel gemäß Patentanspruch 6, **dadurch gekennzeichnet, dass**
die Kömer enthalten:
| | | |
|---|---|---|
| Nutzschlacke | zwischen 15 und 30 Prozent | im Durchschnitt 22,5% |
| Flugaschen | zwischen 65 und 80% | im Durchschnitt 72,5% |
| Natriumsilikat | zwischen 2 und 8% | im Durchschnitt 5%. |

8. Verfahren zum Herstellen vorgefertigter Teile aus Mörtel gemäß Patentanspruch 6, **dadurch gekennzeichnet, dass**
der Mörtel (21) aus dem Voraus-Mörtel (17) in gehärteten Körnern mit Zusatz von Nutzschlacken, Flugaschen, Portlandzement, Natriumsilikat und Zusatzstoffen angefertigt wird, wodurch der besagte Mörtel mit der folgenden prozentualen Zusammensetzung geformt wird:
| | | |
|---|---|---|
| Nutzschlacke | zwischen 20 und 39,64% | im Durchschnitt 29,83% |
| Flugaschen | zwischen 32 und 76,8% | im Durchschnitt 54,4% |
| Portlandzement | zwischen 5 und 11,84% | im Durchschnitt 8,42% |
| Natriumsilikat | zwischen 1 und 6% | im Durchschnitt 3,5% |
| Gemeiner Sand | zwischen 1 und 6% | im Durchschnitt 3,5% |
| Zusatzstoffe | zwischen 0 und 0,7% | im Durchschnitt 0,35%. |

9. Verfahren zum Herstellen vorgefertigter Teile aus Mörtel gemäß Patentanspruch 6, **dadurch gekennzeichnet, dass**
die folgende prozentuale Zusammensetzung vorliegt:
| | | |
|---|---|---|
| Nutzschlacke | zwischen 50 und 90% | im Durchschnitt 70% |
| Flugaschen | zwischen 0 und 20% | im Durchschnitt 10% |
| Portlandzement | zwischen 4 und 25% | im Durchschnitt 14,5% |
| Gemeiner Sand | zwischen 0 und 10% | im Durchschnitt 5% |
| Zusatzstoffe | zwischen 0,2 und 0,8% | im Durchschnitt 0,5%. |

10. Verfahren zum Herstellen vorgefertigter Teile aus Mörtel gemäß Patentanspruch 6, **dadurch gekennzeichnet, dass**
die folgende prozentuale Zusammensetzung vorliegt:
| | | |
|---|---|---|
| Asche | zwischen 10 und 30% | im Durchschnitt 20% |
| Flugaschen | zwischen 0 und 10% | im Durchschnitt 5% |
| Expandierter Ton | zwischen 45 und 70% | im Durchschnitt 57,5% |
| Portlandzement | zwischen 4 und 20% | im Durchschnitt 12% |
| Gemeiner Sand | zwischen 0,2 und 0,8% | im Durchschnitt 0,5%. |

## Revendications

1. Procédé de manufacture d'éléments préfabriqués de mortier dans lequel des solides inorganiques obtenus par la combustion de charbon sont traités de façon que les cendres qui s'échappent sont sélectionnées en fonction de leur propre calibre, les poussières sont pulvérisées de façon à atteindre également un calibre prédéterminé et à pouvoir être mélangées aux éléments à manufacturer et dans des proportions adéquates avec les cendres précitées et du ciment portland ou du silicate de sodium pour les cas où les éléments sont sujets à des traitements thermiques, ainsi qu'à de l'eau, comprenant également une étape au cours de laquelle le mortier va dans des moules où les éléments sont formés par vibration, ou une étape alternative au cours de laquelle le mortier va vers des presses où les éléments sont formés par extrusion.

2. Procédé de manufacture d'éléments préfabriqués de mortier selon la revendication 1 **caractérisé en ce que** les proportions de la composition du mortier sans traitement thermique comprennent :
des poussières pulvérisées entre 70 et90%, 80% en moyenne ;
des cendres volantes entre 5 et 20%, 12,5% en moyenne ;
du ciment portland entre 4,5 et 9%, 7% en moyenne.

3. Procédé de manufacture d'éléments préfabriqués de mortier selon la revendication 1 **caractérisé en ce que** la composition pour le mortier sans traitement thermique comprend :
un accélérateur durcissant entre 0,2 et 0,8%, 0,5% en moyenne.

4. Procédé de manufacture d'éléments préfabriqués de mortier selon la revendication 1 **caractérisé en ce que** les proportions de la composition du mortier sans traitement thermique comprennent :
des poussières pulvérisées entre 15 et 30%, 22,5% en moyenne ;
des cendres volantes entre 65 et 80%, 72,5% en moyenne ;
du silicate de sodium entre 2 et 8%, 5% en moyenne.

5. Procédé de manufacture d'éléments préfabriqués de mortier selon l'une quelconque des revendications précédentes **caractérisé en ce que** du sable ordinaire et /ou de l'argile expansée sont ajoutés au mélange.

6. Procédé de manufacture d'éléments préfabriqués de mortier dans lequel un premier mortier (17) est obtenu par l'homogénéisation de poussières utilisables (5) qui sont pulvérisées de façon à atteindre un calibre prédéterminé, du silicate de sodium (15) et de l'eau (16)ainsi que des cendres volantes utilisables (6) sélectionnées en fonction de leur propre calibre, le premier mortier étant transformé en granules de différents calibres (18) qui sont ensuite traités thermiquement pour durcir dans un four (19) d'où sont extraits des granules durcis (20), comprenant également des étapes au cours desquelles les poussières utilisables précitées (5), l'eau (16), le ciment portland (8) et l'additif d'accélérateur de durcissement (23) ainsi que les cendres volantes (6), le sable ordinaire (22) sont ajoutés aux granules (20) permettant d'obtenir un mortier (21), comprenant une étape au cours de laquelle le mortier va dans des moules où les éléments préfabriqués sont formés par vibration, ou une étape alternative au cours de laquelle le mortier va dans des presses ou les éléments préfabriqués sont formés par extrusion.

7. Procédé de manufacture d'éléments préfabriqués de mortier selon la revendication 6 **caractérisé en ce que** les granules comprennent ;
de la poussière utilisable entre 15 et 30%, 22,5% en moyenne ;
des cendres volantes entre 5 et 80%, 72,5% en moyenne ;
du silicate de sodium entre 2 et 8%, 5% en moyenne.

8. Procédé de manufacture d'éléments préfabriqués de mortier selon la revendication 6 **caractérisé en ce que** le mortier (21) est composé du premier mortier (17 en granules durcis par l'addition de poussières utilisables, de cendres volantes, de ciment portland, de silicate de sodium et d'additifs, le mortier précité étant ensuite formé dans les proportions suivantes :
poussières utilisables entre 20 et 39,64%, 29,83% en moyenne ;
cendres volantes entre 32 et 76,8%, 54,4% en moyenne ;
ciment portland entre 5 et 11,84%, 8,42% en moyenne ;
silicate de sodium entre 1 et 6%, 3,5% en moyenne ;
sable ordinaire entre 1 et 3%, 3,5% en moyenne ;
additifs entre 0 et 0,7%, 0,35% en moyenne.

9. Procédé de manufacture d'éléments préfabriqués de mortier selon la revendication 6 **caractérisé en ce qu'**il a la composition suivante :
poussières utilisables entre 50 et 90%, 70% en moyenne ;
cendres volantes entre 0 et 20%, 10% en moyenne ;
ciment portland entre 4 et 25% 15,5% en moyenne ;
sable ordinaire entre 0 et 10%, 5% en moyenne ;
additifs entre 0,2 et 0,8%, 0,5% en moyenne.

10. Procédé de manufacture d'éléments préfabriqués de mortier selon la revendication 6 **caractérisé en ce qu'**il a la composition suivante :
poussières entre 10 et 30%, 20% en moyenne ;
cendres volantes entre 0 et 10%, 5% en moyenne ;
argile expansée entre 45 et 70%, 57,5% en moyenne ;
ciment portland entre 4 et 20% 12% en moyenne ;
sable ordinaire entre 0 et 10%, 5% en moyenne ;
additifs entre 0,2 et 0,8%, 0,5% en moyenne.
